# EUROPÄISCHE PATENTANMELDUNG

(11) **EP 1 898 182 A1**
(43) Veröffentlichungstag der Anmeldung: **12.03.2008**
(21) Anmeldenummer: 07113840.8
(22) Anmeldetag: 06.08.2007
(51) Int. Cl.: G01C 21/20, G01C 21/32, G08G 1/0969, G09B 29/10

(54) **Mobiles Endgerät und Sendeeinrichtung für ein Verkehrsinformationssystem und Verfahren zur Aktualisierung einer endgeräteseitig gespeicherten tabellarischen Landkarte**

(30) Priorität: 05.09.2006 DE 102006041576
(71) Anmelder: Siemens VDO Automotive AG, 93055 Regensburg (DE)
(72) Erfinder: Kamalski, Theodor, 6006, NC Weert (NL)

(57) **Zusammenfassung**

In dem Verfahren zur Aktualisierung einer endgeräteseitig gespeicherten tabellarischen Landkarte (1) mit Ortseinträgen (2a-e) in einem Verkehrsinformationssystem werden Aktualisierungsdaten (10a-d) empfangen, die eine Ortskennung (13) für Ortseinträge und eine Aktualisierungsanweisung (11) umfassen. Anschließend wird die tabellarische Landkarte (1) durch Bearbeiten von mindestens einem der Ortseinträge (2a-e) abhängig von der Ortskennung (13) und der Aktualisierungsanweisung (11) aktualisiert. Zur Übertragung der Aktualisierungsdaten (10a-d) kann bevorzugt ein funkbasiertes Übertragungssystem eingesetzt werden.

## Beschreibung

Die Erfindung betrifft ein Verfahren zur Aktualisierung einer endgeräteseitig gespeicherten tabellarischen Landkarte mit Ortseinträgen in einem Verkehrsinformationssystem. Die Erfindung betrifft weiterhin ein mobiles Endgerät sowie eine Sendeeinrichtung für ein Verkehrsinformationssystem.

In solchen Verkehrsinformationssystemen werden aktuelle Verkehrsinformationen in kodierter Form von einer Sendeeinrichtung an ein mobiles, üblicherweise in einem Fahrzeug installiertes Endgerät übertragen. Die Verkehrsinformationen werden im mobilen Endgerät in verständliche Verkehrsmeldungen umgesetzt, die direkt an einen Fahrer des Fahrzeugs ausgegeben werden oder für ein späteres oder erneutes Abrufen bereitgestellt werden. Ebenfalls ist möglich, dass die Verkehrsinformationen an ein System zur automatischen Fahrtroutenplanung (Navigationssystem) übergeben werden.

Ein bekanntes Verkehrsinformationssystem dieser Art ist das RDS-TMC (Radio Data System - Traffic Message Channel). Bei diesem System werden die aktuellen Verkehrsinformationen digital kodiert in einem analogen Radiosignal übertragen. Aufgrund der geringen Bandbreite, die neben dem eigentlichen Audio-Radiosignal für die Verkehrsinformationen zur Verfügung steht, werden Orte im RDS-TMC System anhand einer Ortskennung referenziert. Im Rahmen der Anmeldung bezeichnen Orte geographische Objekte jeglicher Dimension, also zum Beispiel flächige (zweidimensionale) Objekte wie Länder, Bezirke, Städte sowie lineare (eindimensionale) Objekte wie Straßen und Straßenabschnitte und punktförmige (nulldimensionale) Objekte wie Straßenkreuzungen oder Ein- beziehungsweise Ausfahrten. Bei der Ortsreferenzierung über eine Ortskennung müssen sowohl Sendeeinrichtung als auch die mobilen Endgeräte über eine inhaltsgleiche tabellarische Landkarte verfügen, anhand derer die Zuordnung zwischen Orten und Ortskennungen vorgenommen wird. Im RDS-TMC System wird beispielsweise ein Ort durch eine nur zwei Byte lange Ortskennung referenziert. Ein Nachteil dabei ist, dass nur solche Objekte referenziert werden können, für die in der tabellarischen Landkarte ein entsprechender Ortseintrag zu einer Ortskennung vorgesehen ist. Durch die geringe Datenlänge der Ortskennung ist zudem die Anzahl möglicher Ortseinträge in der tabellarischen Landkarte eingeschränkt, im Fall von RDS-TMC auf beispielsweise etwa 65.500 Einträge. Eine Aktualisierung erfolgt nach dem Stand der Technik indem eine neue Version einer tabellarischen Landkarte einem mobilen Endgerät über einen Wechseldatenträger, z. B. eine CD, bereitgestellt und gegebenenfalls in einen nicht flüchtigen internen Speicher übernommen wird. Dieses Verfahren ist aufwändig und erlaubt keine kurzfristigen Aktualisierungen.

Es ist eine Aufgabe der Erfindung, ein Verfahren zu schaffen, das eine flexible und zeitnahe Aktualisierung einer endgeräteseitig gespeicherten tabellarischen Landkarte mit Ortseinträgen in einem Verkehrsinformationssystem ermöglicht. Es ist eine weitere Aufgabe der Erfindung, ein mobiles Endgerät und eine Sendeeinrichtung für ein solches Verkehrsinformationssystem zu schaffen.

Die Aufgabe wird gelöst durch die Merkmale der unabhängigen Ansprüche. Vorteilhafte Weiterbildungen sind in den jeweiligen abhängigen Ansprüchen angegeben.

Gemäß einem ersten Aspekt zeichnet sich die Erfindung durch ein Verfahren mit den folgenden Schritten aus: Es werden Aktualisierungsdaten empfangen, wobei die Aktualisierungsdaten eine Ortskennung für Ortseinträge und eine Aktualisierungsanweisung umfassen. Anschließend wird die Landkarte durch Bearbeiten von mindestens einem der Ortseinträge abhängig von der Ortskennung und der Aktualisierungsanweisung aktualisiert. Durch das Aktualisieren der tabellarischen Landkarte nach dem Empfang von Aktualisierungsdaten können Änderungen an der Landkarte vorgenommen werden, ohne dass eine so große Datenmenge übertragen werden muss, wie es eine Aktualisierung durch Austauschen der gesamten tabellarischen Landkarte gemäß dem Stand der Technik erfordert. Im Rahmen einer Aktualisierung werden Ortseinträge bearbeitet, auf die unmittelbar nach einer Änderung systemkonform und mit entsprechend geringem Datenaufkommen für die Ortsreferenzierung zugegriffen werden kann.

In einer vorteilhaften Weiterbildung des ersten Aspekts werden die Aktualisierungsdaten über ein funkbasiertes Übertragungssystem übertragen. Auf diese Weise können Änderungen an der Landkarte kurzfristig vorgenommen werden, ohne dass ein manueller Eingriff eines Benutzers des mobilen Endgeräts notwendig ist.

In einer weiteren vorteilhaften Weiterbildung des ersten Aspekts umfassen die Aktualisierungsdaten eine absolute Koordinatenangabe und der mindestens eine Ortseintrag wird abhängig von der Ortskennung, der Aktualisierungsanweisung und der absoluten Koordinatenangabe bearbeitet. Auf diese Weise können Orte, denen in der tabellarischen Landkarte noch kein Ortseintrag zugeordnet ist, in die Landkarte aufgenommen werden und anschließend über ihre Ortskennung referenziert werden.

Gemäß weiterer vorteilhafter Ausgestaltungen des ersten Aspekts basieren absolute Koordinatenangaben auf dem WGS-84 (World Geodatic System 1984) System. Besonders bevorzugt werden die absoluten Koordinatenangaben im AGORA-C Format empfangen. AGORA-C ist ein bekanntes Verfahren zur Georeferenzierung, das im Rahmen eines Projekts der Europäischen Union entwickelt wurde.

In einer weiteren vorteilhaften Ausgestaltung des ersten Aspekts umfassen die Aktualisierungsdaten eine relative Koordinatenangabe. Der mindestens eine Ortseintrag wird abhängig von der Ortskennung, der Aktualisierungsaktion und der relativen Koordinatenangabe bearbeitet. Besonders bevorzugt ist dabei die tabellarische Landkarte derart hierarchisch strukturiert, dass ein Ortseintrag Verweise auf benachbarte gleichwertige Ortseinträge und/oder auf übergeordnete und/oder untergeordnete Ortseinträge umfasst. Die relative Koordinatenangabe weist zu einem Ortseintrag Verweise auf benachbarte gleichwertige und/oder übergeordnete und/oder untergeordnete Ortseinträge auf. Durch die relativen Koordinatenangaben in Aktualisierungsdaten können hierarchisch strukturierte tabellarische Landkarten unter Berücksichtigung der Beziehungen der Ortseinträge untereinander aktualisiert werden. So wird auch bei hierarchisch strukturierten tabellarischen Landkarten das Einfügen von Ortsreferenzen möglich. In einer weiteren vorteilhaften Ausgestaltung des ersten Aspekts basiert die tabellarische Landkarte auf einer TMC Location Table. Weiter ist bevorzugt, dass die Aktualisierungsdaten eine Gültigkeitsdauer umfassen. Auf diese Weise können temporäre Änderungen an der tabellarischen Landkarte durch einmaliges Übertragen beziehungsweise Empfangen von Aktualisierungsdaten vorgenommen werden.

Gemäß einer weiteren vorteilhaften Ausgestaltung des ersten Aspekts umfasst das Bearbeiten, das Hinzufügen und/oder Löschen und/oder Modifizieren des mindestens einen Ortseintrags. Mit Hilfe dieser drei Aktualisierungsanweisungen lassen sich beliebige Änderungen an der tabellarischen Landkarte vornehmen.

Gemäß einem zweiten Aspekt wird die Aufgabe durch ein mobiles Endgerät für ein Verkehrsinformationssystem gelöst, das zum Empfang und zur Ausgabe von ortsbezogenen Verkehrsinformationen geeignet ist, wobei die empfangenen Verkehrsinformationen Ortsangaben in Form von Ortskennungen umfassen, die sich auf Ortseinträge einer im Endgerät speicherbaren tabellarischen Landkarte beziehen. Das mobile Endgerät ist dabei dazu eingerichtet, eines der zuvor genannten Verfahren durchzuführen. Die Vorteile des zweiten Aspekts entsprechen denen des ersten Aspekts.

Gemäß einem dritten Aspekt wird die Aufgabe gelöst durch eine Sendeeinrichtung für ein Verkehrsinformationssystem, die zum Bereitstellen von ortsbezogenen Verkehrsinformationen über ein funkbasiertes Übertragungssystem geeignet ist, wobei die bereitgestellten Verkehrsinformationen Ortsangaben in Form von Ortskennungen umfassen, die sich auf Ortseinträge einer in einem mobilen Endgerät speicherbaren tabellarischen Landkarte beziehen. Die Sendeeinrichtung stellt Aktualisierungsdaten für die in dem mobilen Endgerät speicherbare tabellarische Landkarte bereit, wobei die Aktualisierungsdaten eine Ortskennung für Ortseinträge und eine Aktualisierungsaktion umfassen. Die Vorteile des dritten Aspekts entsprechen ebenfalls denen des ersten Aspekts.

Gemäß einer bevorzugten Weiterbildung des dritten Aspekts umfassen die Aktualisierungsdaten eine absolute Koordinatenangabe und/oder eine relative Koordinatenangabe. Besonders bevorzugt dabei ist, dass die absolute Koordinatenangabe gemäß dem WGS-84 System erfolgt und in AGORA-C Format bereitgestellt wird.

In einer weiteren vorteilhaften Ausgestaltung des dritten Aspekts werden die Aktualisierungsdaten durch zyklisches Ausstrahlen wiederholt bereitgestellt. Besonders bevorzugt dabei ist, dass die Häufigkeit, mit der Aktualisierungsdaten wiederholt ausgestrahlt werden, mit fortschreitender Zeit abnimmt. Auf diese Weise wird erreicht, dass auch Endgeräte, die zum Zeitpunkt des ersten Ausstrahlens von Aktualisierungsdaten nicht empfangsbereit waren, eine erneute Möglichkeit zum Empfang der Aktualisierungsdaten erhalten. Die Verringerung der Ausstrahlhäufigkeit mit wachsender Zeitdauer seit der ersten Aktualisierung trägt dem Umstand Rechnung, dass die Anzahl mobiler, noch nicht aktualisierter Endgeräte mit jedem Ausstrahlen der Aktualisierungsinformation weiter absinkt.

Die Erfindung wird nachfolgend anhand von Ausführungsbeispielen mit Hilfe von fünf Figuren näher erläutert. Die Figuren zeigen:
- Figur 1a: einen Ausschnitt einer tabellarischen Landkarte,
- Figur 1b: eine grafische Darstellung des Ausschnitts der tabellarischen Landkarte aus Figur 1a,
- Figur 2: drei Beispiele von Aktualisierungsdaten in einer tabellarischen Darstellung,
- Figur 3: ein Ausführungsbeispiel des Verfahrens zum Aktualisieren einer tabellarischen Landkarte,
- Figur 4a: den Ausschnitt der tabellarischen Landkarte aus Figur 1a nach Ausführung eines Verfahrens zur Aktualisierung der tabellarischen Landkarte mit den Aktualisierungsdaten aus Figur 2,
- Figur 4b: eine grafische Darstellung der aktualisierten tabellarischen Landkarte aus Figur 4a,
- Figur 5a: ein weiteres Beispiel von Aktualisierungsdaten und
- Figur 5b: eine grafische Darstellung der mit Hilfe der Aktualisierungsdaten aus Figur 5a aktualisierten tabellarischen Landkarte aus Figur 1a.

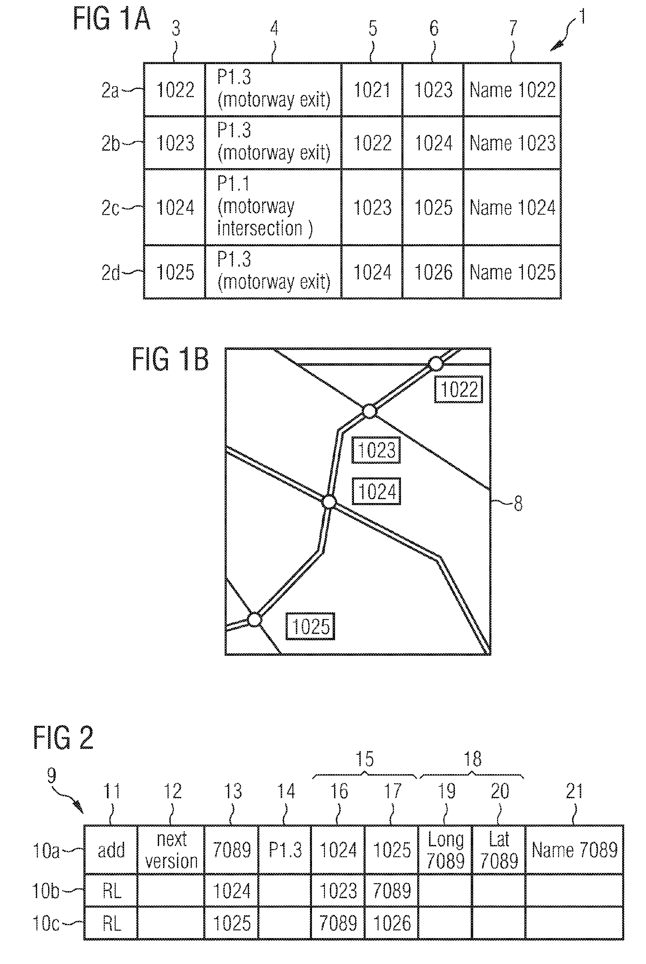

Figur 1a zeigt eine tabellarische Landkarte 1, die aus Ausgangspunkt der folgenden Erläuterungen dienen soll. Die tabellarische Landkarte 1 weist eine Vielzahl von Ortseinträgen 2 in den Zeilen der tabellarischen Landkarte 1 auf. Von der Vielzahl möglicher Ortseinträge 2 sind beispielhaft hier die Ortseinträge 2a bis 2d wieder gegeben. In den Spalten der tabellarischen Landkarte 1 sind die den Ortseinträgen 2 zugeordneten Informationen abgelegt. Jeder der Ortseinträge 2a bis 2d umfasst eine Ortskennung 3, eine Typangabe 4, zwei Verweise 5 und 6 sowie einen Ortsnamen 7. Die angegebenen Informationen stellen wiederum nur eine Auswahl der möglichen Informationen dar, die ein Ortseintrag 2 umfassen kann.

In Verkehrsinformationssystemen mit einer geringen Übertragungsbandbreite werden Ortsangaben in kodierten Verkehrsinformationen anhand einer Ortskennung übertragen. Anhand der in der Tabelle eingetragenen Ortskennung 3 wird der der übertragenen Ortskennung zugeordnete Ortseintrag 2 der tabellarischen Landkarte 1 ermittelt. Anhand der weiteren Informationen des ermittelten Ortseintrags 2, beispielsweise dem gespeicherten Ortsnamen 7, kann dann eine verständliche Ortsangabe erfolgen.

Darüber hinaus kann die tabellarische Landkarte 1 innerhalb eines automatischen Routenplanungssystems (Navigationssystem) eingesetzt werden. Die dargestellte tabellarische Landkarte 1 entspricht in ihrer Struktur einer TMC Location Table, wie sie in der Vorschrift ISO 14819-3 definiert ist. Ortseinträge 2 beziehen sich gemäß dieser Norm entweder auf flächige Elemente wie z. B. Kontinente oder Länder, auf lineare Elemente wie z. B. Straßen oder auf punktförmige Elemente wie z. B. Straßenkreuzungen und Park- oder Rastplätze. Eine Kategorisierung der Ortsangabe ist in der tabellarischen Landkarte 1 durch die Typangabe 4 gegeben. Die Typangabe 4 erfolgt ebenfalls in kodierter Form. Die zugeordnete Klartextangabe (z. B. "Motorway exit" zur Typangabe "P1.3") wird einer vorgegeben Zuordnungstabelle entnommen. Die Klartextangabe ist in der Figur nur der Übersichtlichkeit halber in die tabellarische Landkarte 1 eingetragen.

Anhand der Verweise 5 und 6 können die Ortsangaben 2a bis 2d untereinander in Beziehung gesetzt werden. Die Ortsangaben 2a bis 2d bezeichnen im Beispiel entlang einer Autobahn hintereinander angeordnete Ausfahrten beziehungsweise Autobahnkreuze. Die Abfolge der Ausfahrten bzw. Kreuze, bezogen auf eine definierte Fahrtrichtung, wird durch die Verweise 5 und 6 angegeben. Bezogen auf diese definierte Fahrtrichtung bezeichnet der Verweis 5 dabei das jeweils nächste und der Verweis 6 das jeweils zurückliegende Element. Datentechnisch sind die Ortseinträge 2a bis 2d somit als doppelt verkettete Liste geführt. Neben Verweisen 5 und 6, die sich auf gleichwertige Ortseinträge beziehen, sind auch Verweise auf über- oder untergeordnete Ortseinträge möglich. Ein übergeordneter Ortseintrag könnte sich in diesem Fall beispielsweise auf die Autobahn beziehen, deren Ausfahrten und Kreuze durch die Ortsangaben 2a bis 2d angegeben werden. Durch Verweise auf über- und untergeordnete Ortseinträge 2 wird eine hierarchische Struktur der tabellarischen Landkarte 1 möglich.

Weiterhin ist in der tabellarischen Landkarte 1 üblicherweise eine absolute Koordinatenangabe vorgesehen. Wegen der hierarchischen Struktur der tabellarischen Landkarte sind absolute Koordinatenangaben dabei nur bei punktförmigen Ortseinträgen notwendig. Bei tabellarischen Landkarten nach der Spezifikation einer TMC Location Table erfolgt die absolute Ortsangabe in Form von WGS-84 Koordinaten.

Die in der tabellarischen Landkarte 1 enthaltenen Informationen lassen sich graphisch in Form einer zweidimensionalen Landkarte darstellen. In Figur 1b ist eine zweidimensionale grafische Landkarte 8 aus den Informationen der tabellarischen Landkarte 1 der Figur 1a gezeigt. Neben den punktförmigen Ortseinträgen 2a bis 2d aus der tabellarischen Landkarte 1 sind in der grafischen Landkarte 8 ebenfalls in diesem Kartenabschnitt verlaufende Straßen eingezeichnet, die in dem Ausschnitt der tabellarischen Landkarte 1 nicht angegebenen sind.

Bedingt durch die Ortsreferenzierung durch die übertragenen Ortskennungen können sich Verkehrsinformationen in einem Verkehrsinformationssystem der beschriebenen Art nur auf solche Orte beziehen, zu denen ein Eintrag 2 in der tabellarischen Landkarte 1 enthalten ist. Häufig wird die tabellarische Landkarte 1 einem mobilen Endgerät über einen Wechseldatenträger, z. B. eine CD (Compact Disk), bereitgestellt und gegebenenfalls in einen nicht flüchtigen internen Speicher übernommen. Aktualisierungen der tabellarischen Landkarte 1 können grundsätzlich auf dem gleichen Wege erfolgen, was sowohl für Nutzer des mobilen Endgeräts als auch für einen Diensteanbieter, der die tabellarische Landkarte und ihre Aktualisierung bereitstellt, aufwändig ist und daher kurzfristige Aktualisierungen ausschließt.

Figur 2 zeigt eine Aktualisierungsmeldung 9, umfassend drei Sätze (Zeilen) an Aktualisierungsdaten 10a bis 10c. Jeder Satz an Aktualisierungsdaten 10a bis 10c weist eine Aktualisierungsaktion 11 und eine Ortskennung 13 auf. Optional umfassen die Aktualisierungsdaten 10a bis 10c eine Gültigkeitsdauer 12, eine Typangabe 14, relative Koordinaten 15, aufweisend Verweise 16 und 17 auf benachbarte Ortseinträge, absolute Koordinaten 18, aufweisend Longitudinalkoordinaten 19 und Lateralkoordinaten 20 umfassen, sowie einen Ortsnamen 21.

Bevorzugt wird die Aktualisierungsmeldung 9 über ein funkbasiertes Übertragungssystem von einer Sendeeinrichtung an das mobile Endgerät 1 übertragen. Insbesondere bietet sich hierfür das Übertragungssystem an, über das auch die Verkehrsmeldungen an das mobile Endgerät 1 übermittelt werden. Beim Beispiel des RDS-TMC Verkehrsinformationssystems würden Aktualisierungsmeldungen folglich wie die Verkehrsinformationen als Zusatzinformation zum analogen Radiosignal ausgestrahlt. Darüber hinaus sind auch andere funkbasierte Übertragungswege denkbar, wie beispielsweise die langreichweitigen Systeme GPRS (General Packaging Radio System) und UMTS (Universal Mobile Telecommunication System) oder auch ggf. die kurzreichweitigen Systeme WLAN (Wireless Local Area Network) oder BT (Blue Tooth). Alternativ zu oder in Kombination mit einer funkbasierten Übertragung ist der Einsatz weiterer Übertragungswege möglich. Beispielsweise kann vorgesehen sein, die Aktualisierungsmeldungen zum Herunterladen über das Internet bereitzustellen. Über das Internet geladene Aktualisierungsmeldungen können dann über einen Wechseldatenträger an das mobile Endgerät 1 übertragen werden. Als Wechseldatenträger eignen sich dabei beispielsweise beschreibbare Compact Disks, Speicherkarten oder USB (Universal Serial Bus)-Speichermedien in Flash-Technologie.

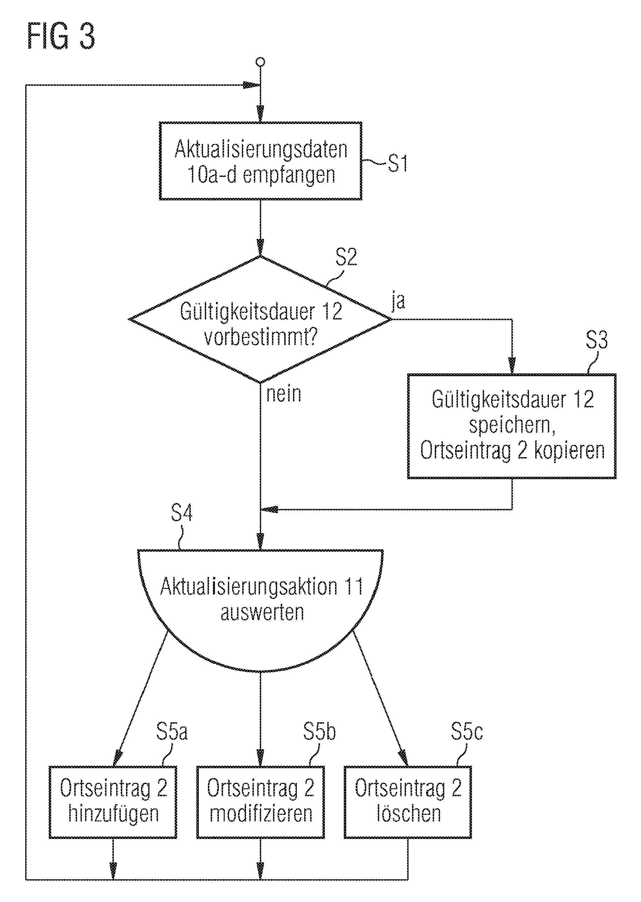

In Figur 3 ist ein Ablauf einer Aktualisierung einer gespeicherten tabellarischen Landkarte in einem Flussdiagramm dargestellt. Im Folgenden wird beispielhaft die Aktualisierung der tabellarischen Landkarte 1 aus Figur 1a mit der Aktualisierungsmeldung 9 aus Figur 2 beschrieben.

Nach dem Empfang des der Sätze an Aktualisierungsdaten 10a-c in einem Schritt S1 wird in einem Schritt S2 die Gültigkeitsdauer 12 der Aktualisierungsdaten 10 ausgewertet. Als Gültigkeitsdauer 12 kann ein festgelegter Zeitpunkt angegeben sein, bis zu dem die in den Aktualisierungsdaten 10 enthaltenen Änderungen Bestand haben sollen. Eine solche Vorgehensweise ist bei vorhersehbar temporären Änderungen angebracht. Alternativ ist möglich, die Gültigkeit einer angegebenen Änderung nicht von vorne herein einzuschränken. Dieses wird beispielsweise durch die Angabe "next version" der Gültigkeitsdauer 12 in den Aktualisierungsdaten 10a bis 10c erreicht. Diese Änderungen bleiben bestehen, bis weitere Aktualisierungen der entsprechenden Ortseinträge in einer weiteren Aktualisierungsmeldung empfangen werden. Wenn in dem Schritt S2 eine vorbestimmte eingeschränkte Gültigkeitsdauer festgestellt wird, verzweigt das Verfahren zu einem Schritt S3.

In dem Schritt S3 wird die Gültigkeitsdauer 12 in einem dafür vorgesehenen Speicher oder Speicherbereich des mobilen Endgeräts gespeichert und eine Kopie des Ortseintrags 2 der tabellarischen Landkarte 1, auf den sich die mit der Gültigkeitsdauer 12 versehenen Aktualisierungsdaten 10 beziehen, angelegt. Die abgespeicherten Gültigkeitsdauern werden regelmäßig überwacht. Falls eine Gültigkeitsdauer überschritten ist, wird der ursprüngliche Zustand der tabellarischen Landkarte 1 anhand der abgelegten Kopie eines Ortseintrags 2 wieder hergestellt.

Nach dem Ausführen des Schritts S3 oder falls in Schritt S2 keine beschränkte Gültigkeitsdauer 12 festgestellt wurde, wird das Verfahren mit einem Schritt S4 fortgesetzt. In dem Schritt S4 wird die Aktualisierungsaktion 11 ausgewertet und das Verfahren entsprechend der Aktualisierungsaktion 11 mit einem der Schritte S5a bis S5c fortgesetzt. Beispielhaft sind drei mögliche Aktualisierungsaktionen angegeben: Ein Hinzufügen eines Ortseintrags 2 zur tabellarischen Landkarte 1 in dem Schritt S5a, ein Modifizieren eines Ortseintrags 2 der tabellarischen Landkarte 1 in dem Schritt S5b sowie ein Löschen eines Ortseintrags 2 der tabellarischen Landkarte 1 in dem Schritt S5c.

Die Aktualisierungsdaten 10a aus Figur 2 zeigen ein Beispiel für das Hinzufügen eines Ortseintrags 2, angegeben durch die Aktualisierungsaktion 11 "add". Von der Aktualisierungsaktion 11 und der Gültigkeitsdauer 12 abgesehen, dienen alle weiteren Informationen der Aktualisierungsdaten 10a der Definition des neuen Ortseintrags 2 der tabellarischen Landkarte 1. Neben der Ortskennung 13 wird die Typangabe 14, relative Koordinaten 15, absolute Koordinaten 18 und der Ortsname 21 angegeben. Die relativen Koordinaten 15 umfassen Verweise 16, 17. Die absoluten Koordinaten 18 umfassen Longitudinalkoordinaten 19 und Lateralkoordinaten 20.

Bei der Angabe der Ortskennung 13 für den neuen Ortseintrag 2 hat der Dienstanbieter, der diese Aktualisierungsdaten 10a bereitstellt, dafür Sorge zu tragen, dass diese Ortskennung 13 noch von keinem anderen Ortseintrag 2 der tabellarischen Landkarte 1 als Ortskennung 3 benutzt wird. Im mobilen Endgerät kann zusätzlich ein Schutzmechanismus vorgesehen sein, durch den solche, in sich widersprüchliche Aktualisierungsdaten 10 ignoriert werden.

Die Aktualisierungsdaten 10b und 10c betreffen jeweils Abänderungen (Modifikation) bereits bestehender Ortseinträge 2, hier der Ortseinträge 2c und 2d. In diesen Fällen werden neben der Ortskennung 13 für den Ortseintrag nur solche Informationen übermittelt, die von einer Änderung betroffen sind. Hier sind das lediglich die relativen Koordinaten 15, umfassend die Verweise 16 und 17 auf benachbarte Ortseinträge.

Nach erfolgter Bearbeitung eines Ortseintrags verzweigt das Verfahren zurück zum Schritt S1 zum Empfang weiterer Aktualisierungsdaten. Es versteht sich von selbst, dass das Empfangen und Abarbeiten von Aktualisierungsdaten nicht wie dargestellt zwingend abwechselnd, sondern auch teilweise parallel zueinander verlaufen kann.

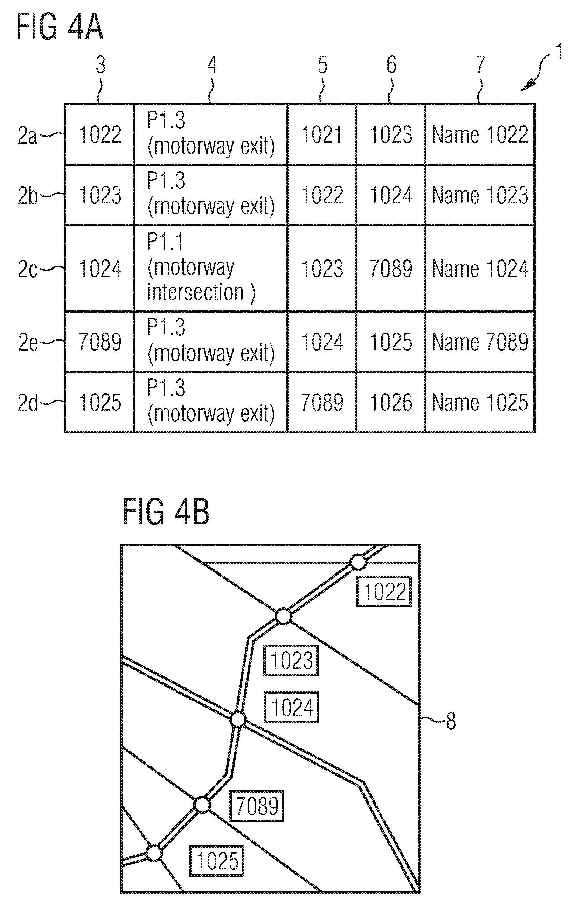

In Figur 4 ist in gleicher Weise wie in Figur 1 die tabellarische Landkarte 1 (Figur 4a) und die grafische Landkarte 8 (Figur 4b) nach Ablauf der Aktualisierung gemäß Figur 3 mit den Aktualisierungsdaten 10a bis 10c der Figur 2 dargestellt.

In der tabellarischen Landkarte 1 der Figur 4a ist der anhand der Aktualisierungsdaten 10a erstellte neue Ortseintrag 2e mit der Ortskennung 3 "7089" enthalten. In der tabellarischen Landkarte 1 sind der Ortstyp 4, die Verweise 5, 6 und der Ortsname 7 entsprechend des empfangenen Ortstyps 14, der Verweise 16, 17 und des Ortsnamens 21 eingetragen. Der ebenfalls erfolgte Eintrag der absoluten Koordinaten 18 ist in der tabellarischen Landkarte 1 nicht dargestellt. Bei den Ortseinträgen 2c und 2d, auf die sich die Aktualisierungsdaten 10b und 10c beziehen, sind entsprechend der empfangenen Verweise 16, 17 die Verweise 5 und 6 in der tabellarischen Landkarte 1 geändert. Durch die Änderung der Verweise 5, 6 ist der neue Ortseintrag 2e in der durch die Verweise 5, 6 gebildeten doppelt verketteten Liste zwischen den Ortseinträgen 2c und 2d angeordnet. Dass der Eintrag 2e in der Darstellung der Figur 4a auch physikalisch zwischen den Einträgen 2c und 2e liegt, dient der Übersichtlichkeit und muss in der Datenstruktur der tabellarischen Landkarte 1 in dieser Weise nicht gegeben sein. Aus der grafischen Landkarte 8 ist ersichtlich, dass der neue Ortseintrag 2e in Übereinstimmung mit seinen relativen Koordinaten auch bezüglich seiner absoluten Koordinaten zwischen den Ortseinträgen 2c und 2d positioniert ist. Als eine weitere Änderung gegenüber der grafischen Landkarte 8 aus Figur 1b zeigt die grafische Landkarte 8 aus Figur 4b eine zusätzliche Straße durch den vom Ortseintrag 2e definierten Punkt. Die diesem linearen Element zugrunde liegenden Aktualisierungsdaten 10 sind in der Figur 2 nicht dargestellt, lassen sich jedoch durch eine oder mehrere Anweisungen ähnlich den Aktualisierungsdaten 10a realisieren.

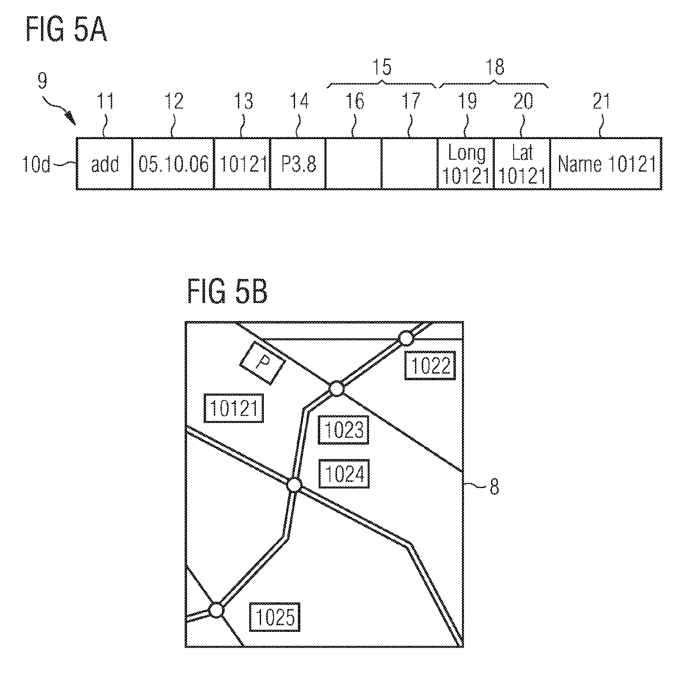

Abbildung 5a zeigt ein weiteres Beispiel einer Aktualisierungsmeldung 9. Die Aktualisierungsmeldung 9 weist hier nur einen Satz an Aktualisierungsdaten 10d auf.

Wie anhand der Aktualisierungsaktion 11 ersichtlich, betrifft die Aktualisierungsaktion 10d wie die Aktualisierungsaktion 10a das Hinzufügen eines Ortseintrags 2. Im Unterschied zu den bisherigen Ausführungsbeispielen ist in diesem Fall eine begrenzte Gültigkeitsdauer 12 in Form eines bestimmten Datums, hier "05.10.06", angegeben. Der kodierte Ortstyp 14 "P3.8" gibt an, dass sich der neu zu erstellende Ortseintrag 2 mit der Ortskennung 13 "10121" auf einen Parkplatz bezieht. Dieser Parkplatz steht in keiner Beziehung zu gleichwertigen Ortselementen und weist daher keine relativen Koordinaten 15 sondern lediglich absolute Koordinaten 18 auf.

In Figur 5b ist eine grafische Landkarte 8 dargestellt, wie sie sich aus der in Figur 1a angegebenen grafischen Landkarte 8 nach Anwendung der Aktualisierungsdaten 10d aus Figur 5a ergibt. Die grafische Landkarte 8 ist eine grafische Repräsentation der in der tabellarischen Landkarte 1 definierten Ortseinträge 2. Von diesen Ortseinträgen sind üblicherweise nur punktförmige Ortseinträge mit absoluten Koordinaten versehen. Die absolute Position linearer oder flächiger Elemente ergibt sich durch die absoluten Koordinaten von punktförmigen Elementen, die über Verweise mit den linearen oder flächigen Elementen verknüpft sind. Daher stehen beispielsweise zur Angabe des Verlaufs einer Straße nur wenige ausgewählte Punkte zur Verfügung, zwischen denen der Straßenverlauf durch gerade Abschnitte approximiert wird. Dieses kann zu Problemen bei der relativen Lage von Elementen zueinander in der grafischen Landkarte 8 führen. Beispielsweise ist die Position des durch die Aktualisierungsdaten 10d definierten Parkplatzes durch seine absoluten Koordinaten eindeutig bestimmt. Der Verlauf der Straße, an der dieser Parkplatz liegt und von der aus er zu erreichen ist, wird jedoch wegen fehlender Verweise zum Parkplatz aufgrund der Approximation des Straßenverlaufs in der Umgebung des Parkplatzes unter Umständen in der graphischen Landkarte 8 nicht genau wiedergegeben. Es kann daher vorkommen, dass die Straße den Parkplatz scheinbar durchquert, anstatt gerade an ihm vorbei zu laufen, oder zwischen Straße und Parkplatz ein solcher Abstand ist, dass der Betrachter nicht entnehmen kann, dass der Parkplatz durch diese Straße erreichbar sein sollte. Um eine solche Unsicherheit und Ungenauigkeit auszuschalten, kann die Angabe der absoluten Koordinaten 18 in den Aktualisierungsdaten 10 neben den eigentlichen Koordinaten 19 und 20 zusätzliche Informationen enthalten, anhand derer eine relative Positionierung von Elementen der tabellarischen Landkarte 1 erfolgen kann. Ein System zur Georeferenzierung durch Angabe von absoluten Koordinaten zusammen mit zusätzlichen (Umgebungs-) Informationen ist aus dem Projekt AGORA-C bekannt. Im Rahmen der Erfindung ist denkbar, Aktualisierungsdaten 10 mit einer Übergabe absoluter Koordinaten 18 gemäß dem AGORA-C Projekt zu versehen.

Nachdem in einem mobilen Endgerät eine Aktualisierung der tabellarischen Landkarte 1 erfolgt ist, kann in weiteren Verkehrsmeldungen des Verkehrsinformationssystems auf neu hinzugekommene oder geänderte Ortseinträge 2 durch Übertragung ihrer Ortskennung 3 zurückgegriffen werden. Da nicht sichergestellt ist, dass alle Endgeräte eine gesendete Aktualisierungsmeldung 9 empfangen haben, ist ein einmaliges Ausstrahlen der Aktualisierungsmeldung 9 durch eine Sendeeinrichtung üblicherweise nicht ausreichend. Es ist daher vorteilhaft, die Aktualisierungsmeldung 9 entweder zyklisch oder vor jeder Verkehrsmeldung, die auf einen von der Aktualisierungsmeldung 9 betroffenen Ortseintrag 2 Bezug nimmt, auszustrahlen. Mit jeder wiederholt ausgestrahlten Aktualisierungsmeldung 9 steigt der Anteil der mobilen Endgeräte, die die Aktualisierungsmeldung 9 bereits empfangen und umgesetzt haben. Die Häufigkeit, mit der eine Aktualisierungsmeldung 9 wiederholt wird, kann folglich im Laufe der Zeit abnehmen und letztlich kann eine Wiederholung gänzlich entfallen.

Obgleich in den Ausführungsbeispielen anhand eines Verkehrsinformationssystems beschrieben, das auf dem analog übertragenen RDS-TMC System beruht, ist die Erfindung selbstverständlich nicht hierauf beschränkt sondern kann ebenso im Zusammenhang mit anderen Verkehrsinformationssystemen eingesetzt werden, z.B. solchen, die auf dem TPEG-Protocol (Traffic Protocol Expert Group) basieren und/oder über digitales Radio (DAB - Digital Audio Broadcast) übertragen werden.

## Patentansprüche

1. Verfahren zur Aktualisierung einer endgeräteseitig gespeicherten tabellarischen Landkarte (1) mit Ortseinträgen (2a-e) in einem Verkehrsinformationssystem mit den folgenden Schritten:
- Empfangen von Aktualisierungsdaten (10a-d), wobei die Aktualisierungsdaten (10a-d) eine Ortskennung (13) für Ortseinträge (2a-e) und eine Aktualisierungsanweisung (11) umfassen,
- Aktualisieren der Landkarte (1) durch Bearbeiten von mindestens einem der Ortseinträge (2a-e) abhängig von der Ortskennung (13) und der Aktualisierungsanweisung (11).

2. Verfahren nach Anspruch 1, bei dem die Aktualisierungsdaten (10a-d) über ein funkbasiertes Übertragungssystem übertragen werden.

3. Verfahren nach einem der Ansprüche 1 oder 2, bei dem die Aktualisierungsdaten (1a-e) eine absolute Koordinatenangabe (18) umfassen und bei dem der mindestens eine Ortseintrag (2a-e) abhängig von der Ortskennung (13), der Aktualisierungsanweisung (11) und der absoluten Koordinatenangabe (18) bearbeitet wird.

4. Verfahren nach Anspruch 3, bei dem die absolute Koordinatenangabe (18) auf dem WGS-84 System basiert.

5. Verfahren nach Anspruch 4, bei dem die absolute Koordinatenangabe (18) im AGORA-C Format empfangen wird.

6. Verfahren nach einem der Ansprüche 1 bis 5, bei dem die Aktualisierungsdaten (10a-d) eine relative Koordinatenangabe (15) umfassen und bei dem der mindestens eine Ortseintrag (2a-e) abhängig von der Ortskennung (13), der Aktualisierungsanweisung (11) und der relativen Koordinatenangabe (15) bearbeitet wird.

7. Verfahren nach Anspruch 6, bei dem die tabellarische Landkarte (1) derart hierarchisch strukturiert ist, dass ein Ortseintrag (2a-e) Verweise (5, 6) auf benachbarte gleichwertige Ortseinträge (2a-e) und/oder auf übergeordnete und/oder untergeordnete Ortseinträge umfasst und bei dem die relative Koordinatenangabe (15) zu einem Ortseintrag (2a-e) Verweise (16, 17) auf benachbarte gleichwertige Ortseinträge (2a-e) und/oder übergeordnete und/oder untergeordnete Ortseinträge aufweist.

8. Verfahren nach einem der Ansprüche 1 bis 7, bei dem die tabellarische Landkarte (1) auf einer TMC location table basiert.

9. Verfahren nach einem der Ansprüche 1 bis 8, bei dem die Aktualisierungsdaten (10a-d) eine Gültigkeitsdauer (12) umfassen.

10. Verfahren nach einem der Ansprüche 1 bis 9, bei dem das Bearbeiten des mindestens einen Ortseintrags (2a-e) das Hinzufügen und/oder Löschen und/oder Modifizieren des mindestens einen Ortseintrags (2a-e) umfasst.

11. Mobiles Endgerät für ein Verkehrsinformationssystem, das zum Empfang und zur Ausgabe von ortsbezogenen Verkehrsinformationen geeignet ist, wobei die empfangenen Verkehrsinformationen Ortsangaben in Form von Ortskennungen umfassen, die sich auf Ortseinträge (2a-e) einer im Endgerät speicherbaren tabellarischen Landkarte (1) beziehen,
**dadurch gekennzeichnet, dass**
das mobile Endgerät dazu eingerichtet ist, ein Verfahren nach einem der Ansprüche 1 bis 10 durchzuführen.

12. Sendeeinrichtung für ein Verkehrsinformationssystem, die zum Bereitstellen von ortsbezogenen Verkehrsinformationen über ein funkbasiertes Übertragungssystem geeignet ist, wobei die bereitgestellten Verkehrsinformationen Ortsangaben in Form von Ortskennungen umfassen, die sich auf Ortseinträge (2a-e) einer in einem mobilen Endgerät speicherbaren tabellarischen Landkarte (1) beziehen,
**dadurch gekennzeichnet, dass**
die Sendeeinrichtung Aktualisierungsdaten (10a-d) für die in dem mobilen Endgerät speicherbare tabellarische Landkarte (1) bereitstellt, wobei die Aktualisierungsdaten (10a-d) eine Ortskennung (13) für Ortseinträge (2a-e) und eine Aktualisierungsanweisung (11)umfassen.

13. Sendeeinrichtung nach Anspruch 12, bei der die Aktualisierungsdaten eine absolute Koordinatenangabe (18) und/oder eine relative Koordinatenangabe (15) umfassen.

14. Sendeeinrichtung nach Anspruch 13, bei der die absolute Koordinatenangabe (18) gemäß dem WGS-84 System erfolgt und im AGORA-C Format bereitgestellt wird.

15. Sendeeinrichtung nach einem der Ansprüche 12 bis 14, bei der die Aktualisierungsdaten (10a-d) durch zyklisches Ausstrahlen wiederholt bereitgestellt werden.

16. Sendeeinrichtung nach Anspruch 15, bei der die Häufigkeit, mit der die Aktualisierungsdaten (10a-d) wiederholt ausgestrahlt werden, mit fortschreitender Zeit abnimmt.
